# EUROPEAN PATENT APPLICATION

(11) **EP 4 332 613 A1**
(43) Date of publication of application: **06.03.2024**
(21) Application number: 22795547.3
(22) Date of filing: 07.04.2022
(51) Int. Cl.: G01S 7/295, G01S 7/40, G01S 13/04, G01S 13/933

(54) **ELECTRONIC DEVICE, INFORMATION PROCESSING DEVICE, PARAMETER DETERMINATION METHOD, AND PARAMETER DETERMINATION PROGRAM**

(30) Priority: 27.04.2021 JP 2021075368
(71) Applicant: Kyocera Corporation, Kyoto-shi Kyoto 612-8501 (JP)
(72) Inventor: NISHIKIDO Masamitsu, Kyoto-shi, Kyoto 612-8501 (JP); MURAKAMI Youhei, Kyoto-shi, Kyoto 612-8501 (JP); KAWAJI Satoshi, Kyoto-shi, Kyoto 612-8501 (JP); SATO Masayuki, Kyoto-shi, Kyoto 612-8501 (JP)
(74) Representative: Viering, Jentschura & Partner mbB Patent- und Rechtsanwälte
(86) International application number: PCT/JP2022/017282
(87) International publication number: WO 2022/230631

(57) **Abstract**

An electronic device includes a transmission antenna, a reception antenna, and a controller. The transmission antenna transmits a transmission wave. The reception antenna receives a reflected wave that is the transmission wave having been reflected. The controller detects an object that reflects the transmission wave, based on a transmission signal transmitted as the transmission wave and a reception signal received as the reflected wave. The electronic device determines a parameter to be used in determination as to whether the object is detected, based on a height of the electronic device.

## Description

### CROSS-REFERENCE TO RELATED APPLICATIONS

This application claims priority from Japanese Patent Application No. 2021-75368 filed in Japan on April 27, 2021, the entire disclosure of which is incorporated herein by reference.

### TECHNICAL FIELD

The present disclosure relates to an electronic device, an information processing apparatus, a parameter determining method, and a parameter determining program.

### BACKGROUND OF INVENTION

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and receiving a reflected wave reflected off the object. Such a technology for measuring a distance or the like is expected to be more important in the future with progresses of a technology for assisting drivers in driving and an automated-driving-related technology for partially or entirely automating driving.

The technology for detecting a surrounding object with a radio wave, such as the millimeter-wave radar described above, may be employed not only in mobility devices on land such as automobiles and mobility devices on water such as ships but also in mobility devices in air such as drones or air mobility, for example.

In the technology for detecting a surrounding object with a radio wave, noise countermeasures are important. In particular, the noise floor tends to easily fluctuate depending on a surrounding environment. Accordingly, for example, Patent Literature 1 has proposed a technique for accurately detecting the occurrence of radio interference even when the noise floor is relatively high. In general, when a surrounding object is detected with a radio wave in an environment in which the noise floor easily fluctuates, the risk of false detection or missed detection increases. Thus, the object detection accuracy may decrease.

### CITATION LIST

### PATENT LITERATURE

Patent Literature 1: Japanese Unexamined Patent Application Publication No. 2018-179670

### SUMMARY

In one embodiment, an electronic device includes a transmission antenna, a reception antenna, and a controller. The transmission antenna transmits a transmission wave. The reception antenna receives a reflected wave that is the transmission wave having been reflected. The controller detects an object that reflects the transmission wave, based on a transmission signal transmitted as the transmission wave and a reception signal received as the reflected wave.

The electronic device determines a parameter to be used in determination as to whether the object is detected, based on a height of the electronic device.

In one embodiment, an electronic device includes a transmission antenna, a reception antenna, and a controller. The transmission antenna transmits a transmission wave. The reception antenna receives a reflected wave that is the transmission wave having been reflected. The controller detects an object that reflects the transmission wave, based on a transmission signal transmitted as the transmission wave and a reception signal received as the reflected wave.

The electronic device transmits information on a position and a height of the electronic device and sensing information based on at least one of the transmission signal or the reception signal at the position of the electronic device, to an information processing apparatus.

In one embodiment, an information processing apparatus communicates with an electronic device. The electronic device detects an object that reflects a transmission wave, based on a transmission signal transmitted as the transmission wave and a reception signal received as a reflected wave that is the transmission wave having been reflected.

The information processing apparatus includes a reception unit, a controller, and a transmission unit.

The reception unit receives, from the electronic device, information on a position and a height of the electronic device and sensing information based on at least one of the transmission signal or the reception signal at the position of the electronic device.

The controller determines a parameter to be used in the electronic device in determination as to whether the object is detected, based on the sensing information at the position and the height of the electronic device.

The transmission unit transmits the parameter determined by the controller to the electronic device.

In one embodiment, a method is a parameter determining method for determining a parameter to be used in an electronic device in determination as to whether an object that reflects a transmission wave is detected. The electronic device includes a transmission antenna, a reception antenna, and a controller.

The transmission antenna transmits the transmission wave.

The reception antenna receives a reflected wave that is the transmission wave having been reflected.

The controller detects the object, based on a transmission signal transmitted as the transmission wave and a reception signal received as the reflected wave.

The parameter determining method includes
determining a parameter to be used in determination as to whether the object is detected, based on a height of the electronic device.

In one embodiment, a program is a parameter determining program for determining a parameter to be used in an electronic device in determination as to whether an object that reflects a transmission wave is detected. The electronic device includes a transmission antenna, a reception antenna, and a controller.

The transmission antenna transmits the transmission wave.

The reception antenna receives a reflected wave that is the transmission wave having been reflected.

The controller detects the object, based on a transmission signal transmitted as the transmission wave and a reception signal received as the reflected wave.

The parameter determining program causes the electronic device to perform
determining a parameter to be used in determination as to whether the object is detected, based on a height of the electronic device.

### BRIEF DESCRIPTION OF THE DRAWINGS

FIG. 1 is a diagram for describing how an electronic device according to a first embodiment is used.
FIG. 2 is a functional block diagram schematically illustrating a configuration of the electronic device according to the first embodiment.
FIG. 3 is a diagram for describing a configuration of a transmission signal according to the first embodiment.
FIG. 4 is a functional block diagram schematically illustrating the configuration of the electronic device according to the first embodiment.
FIG. 5 is a flowchart for describing an operation of the electronic device according to the first embodiment.
FIG. 6 is a graph for describing detection of an object performed by the electronic device according to the first embodiment.
FIG. 7 is a flowchart for describing an operation of an electronic device according to a second embodiment.
FIG. 8 is a diagram for describing an example of a table stored in the electronic device according to the second embodiment.
FIG. 9 is a diagram schematically illustrating a configuration of a system according to a third embodiment.
FIG. 10 is a functional block diagram schematically illustrating a configuration of an information processing apparatus according to the third embodiment.
FIG. 11 is a flowchart for describing an operation of an electronic device according to the third embodiment.
FIG. 12 is a flowchart for describing an operation of the information processing apparatus according to the third embodiment.
FIG. 13 is a flowchart for describing an operation of the electronic device according to the third embodiment.

### DESCRIPTION OF EMBODIMENTS

The detection accuracy is desirably improved in a technology for detecting a predetermined object by receiving a reflected wave that is a transmitted transmission wave reflected off the object. The present disclosure relates to providing an electronic device, an information processing apparatus, a parameter determining method, and a parameter determining program that contribute to improvement of the object detection accuracy. One embodiment can provide an electronic device, an information processing apparatus, a parameter determining method, and a parameter determining program that contribute to improvement of the object detection accuracy. Some embodiments are described in detail below with reference to the drawings.

### (First Embodiment)

For example, an electronic device according to a first embodiment is mounted in various vehicles (mobility devices) and thus is capable of detecting a predetermined object located around each of the mobility devices. To this end, the electronic device according to the first embodiment is capable of transmitting a transmission wave to an area around the mobility device from a transmission antenna installed on or in the mobility device. The electronic device according to the first embodiment is also capable of receiving a reflected wave that is the reflected transmission wave, from a reception antenna installed on or in the mobility device. For example, a radar sensor or the like installed on or in the mobility device may include at least one of the transmission antenna or the reception antenna. The electronic device according to the first embodiment is capable of measuring a distance or the like between a sensor included in the electronic device and a predetermined object when at least one of the sensor or the object is movable. The electronic device according to the first embodiment is also capable of measuring a distance or the like between the sensor included in the electronic device and the object even when both the sensor and the object are stationary.

The electronic device according to one embodiment of the present disclosure may be provided in any mobility device. Examples of the mobility device may include a vehicle, a ship, and an aircraft. Examples of the vehicle may include an automobile, an industrial vehicle, a railroad vehicle, a daily-use vehicle, and a fixed-wing aircraft traveling on a runway. Examples of the automobile may include a passenger vehicle, a truck, a bus, a two-wheel vehicle, and a trolley bus. Examples of the industrial vehicle may include an industrial vehicle for agriculture and an industrial vehicle for construction. Examples of the industrial vehicle may include a forklift and a golf cart. Examples of the industrial vehicle for agriculture may include a tractor, a cultivator, a transplanter, a binder, a combine, and a mower. Examples of the industrial vehicle for construction may include a bulldozer, a scraper, an excavator, a crane truck, a dump truck, and a road roller. The vehicle may be a vehicle driven by human power. The categories of the vehicle are not limited to the example described above. Examples of the automobile may include an industrial vehicle capable of traveling on a road. The same vehicle may be included in multiple categories. Examples of the ship may include a personal watercraft (PWC), a boat, a tanker, and a submarine. Examples of the aircraft may include a fixed-wing aircraft and a rotary-wing aircraft.

The electronic device according to one embodiment may be provided particularly in a mobility device that may move in a height direction. The height direction may be for example an up-down direction, for example a vertical direction, or for example a direction perpendicular to a ground surface. The assumed mobility device that may move in the height direction may be, for example, a drone or any of various types of air mobility. The assumed mobility device that may move in the height direction may be, for example, an aircraft or a submarine. An example is described below in which the electronic device according to the one embodiment is provided in a drone that is the mobility device that may move in the height direction. The mobility device that may move in the height direction may move also in a direction other than the height direction. For example, the mobility device that may move in the height direction may move in any direction such as at least any of a forward direction, a backward direction, a left direction, or a right direction. The mobility device that may move in the height direction may move in an oblique direction that is a combination of the height direction and any of the forward direction, the backward direction, the left direction, or the right direction.

An example of how the electronic device according to the first embodiment detects an object is described.

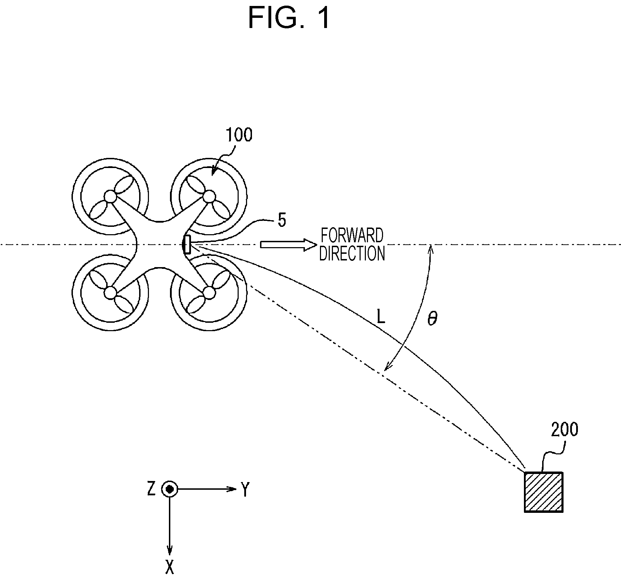

FIG. 1 is a diagram for describing how the electronic device according to the first embodiment is used. FIG. 1 illustrates an example in which a sensor, including a transmission antenna and a reception antenna, according to the first embodiment is installed on a mobility device (drone).

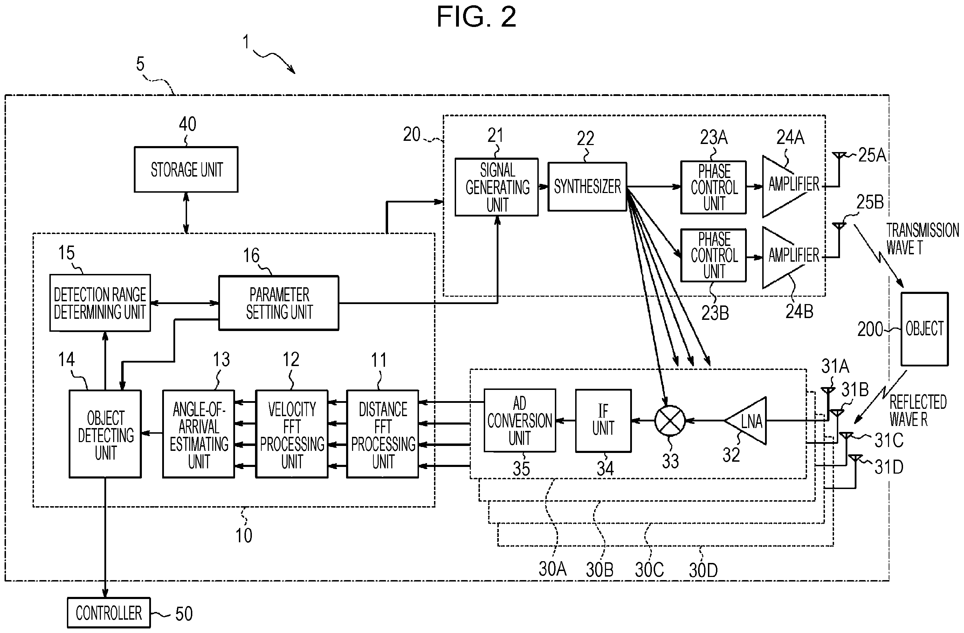

A sensor 5, including a transmission antenna and a reception antenna, according to the first embodiment is installed on a mobility device 100 illustrated in FIG. 1. The mobility device 100 illustrated in FIG. 1 includes an electronic device 1 according to the first embodiment mounted (for example, built) therein. A specific configuration of the electronic device 1 is described later. The sensor 5 may include at least one of the transmission antenna or the reception antenna, for example. The sensor 5 may appropriately include at least any of other functional units, such as at least part of a sensor controller 10 (FIG. 2) included in the electronic device 1. The mobility device 100 illustrated in FIG. 1 may be, for example, a drone but may be a mobility device of any type as described above. In FIG. 1, the mobility device 100 may move (fly), for example, in a positive Y-axis direction (forward direction) illustrated in FIG. 1 or in another direction, or may be stationary (hover) without moving.

As illustrated in FIG. 1, the sensor 5 including the transmission antenna is installed on the mobility device 100. In the example illustrated in FIG. 1, only one sensor 5 including the transmission antenna and the reception antenna is installed at a front portion of the mobility device 100. The position where the sensor 5 is installed on the mobility device 100 is not limited to the position illustrated in FIG. 1 and may be another appropriate position. For example, the sensor 5 illustrated in FIG. 1 may be installed on a left side, on a right side, at a top portion, and/or at a bottom portion of the mobility device 100. The number of such sensors 5 may be any number equal to or greater than 1 depending on various conditions (or requirements) such as a range and/or an accuracy of measurement performed at the mobility device 100. The sensor 5 may be installed inside the mobility device 100. The inside of the mobility device 100 may be, for example, a space in a housing of the drone.

The sensor 5 transmits an electromagnetic wave as a transmission wave from the transmission antenna. For example, when a predetermined object (for example, an object 200 illustrated in FIG. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object.

The sensor 5 including the transmission antenna may be typically a radar (Radio Detecting and Ranging) sensor that transmits and receives a radio wave. However, the sensor 5 is not limited to a radar sensor. The sensor 5 according to the first embodiment may be, for example, a sensor based on LIDAR (Light Detection and Ranging, Laser Imaging Detection and Ranging) technology that uses an optical wave. Each of these sensors can include, for example, a patch antenna. Since the technologies such as the radar and the LIDAR are already known, detailed description may be appropriately simplified or omitted.

The electronic device 1 mounted in the mobility device 100 illustrated in FIG. 1 receives, from the reception antenna, the reflected wave of the transmission wave transmitted from the transmission antenna of the sensor 5. In this manner, the electronic device 1 can detect the predetermined object 200 located within a predetermined distance from the mobility device 100. For example, as illustrated in FIG. 1, the electronic device 1 can measure a distance L between the mobility device 100 and the predetermined object 200. The electronic device 1 can also measure a relative velocity between the mobility device 100 and the predetermined object 200. The electronic device 1 can further measure a direction (an angle of arrival θ) from which the reflected wave from the predetermined object 200 arrives at the mobility device 100.

The object 200 may be, for example, another drone flying or hovering in a space near the mobility device 100. The object 200 may also be any object located around the mobility device 100, such as the ground, a building, a person such as a pedestrian, an animal, other forms of life such as an insect, a tree, a bridge, an antenna, a wall, or any of various obstacles. The object 200 may be in motion or stationary. For example, the object 200 may be traveling or flying, may be hovering around the mobility device 100, or may be installed on the ground around the mobility device 100.

In FIG. 1, a ratio between a size of the sensor 5 and a size of the mobility device 100 does not necessarily indicate an actual ratio. FIG. 1 illustrates the sensor 5 that is installed at an outer portion of the mobility device 100. However, in the first embodiment, the sensor 5 may be installed at various positions of the mobility device 100. For example, in the first embodiment, the sensor 5 may be installed inside the mobility device 100 so as not to appear on the external appearance of the mobility device 100.

A typical example is described below in which the transmission antenna of the sensor 5 transmits a radio wave in a frequency band, such as a millimeter wave (equal to or higher than 30 GHz) or a quasi-millimeter wave (for example, around 20 GHz to 30 GHz). For example, the transmission antenna of the sensor 5 may transmit a radio wave having a frequency bandwidth of 4 GHz such as from 77 GHz to 81 GHz.

FIG. 2 is a functional block diagram schematically illustrating an example of a configuration of the electronic device 1 according to the first embodiment. An example of the configuration of the electronic device 1 according to the first embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency band of 79 GHz has a feature that a usable frequency bandwidth is wider than other millimeter-wave and/or quasi-millimeter-wave radars of frequency bands of 24 GHz, 60 GHz, and 76 GHz, for example. Such an embodiment is described below.

As illustrated in FIG. 2, the electronic device 1 according to the first embodiment may include the sensor 5 and a controller 50. The controller 50 controls various operations of the electronic device 1. The controller 50 may include at least one or more processors. The electronic device 1 according to the first embodiment includes the sensor controller 10. The electronic device 1 according to the first embodiment may also appropriately include another functional unit such as at least any of a transmission unit 20, reception units 30A to 30D, and a storage unit 40. As illustrated in FIG. 2, the electronic device 1 may include multiple reception units such as the reception units 30A to 30D. When the reception units 30A, 30B, 30C, and 30D are not distinguished from one another, the reception units 30A, 30B, 30C, and 30D are simply referred to as "reception units 30" below.

The sensor controller 10 may include a distance FFT processing unit 11, a velocity FFT processing unit 12, an angle-of-arrival estimating unit 13, an object detecting unit 14, a detection range determining unit 15, and a parameter setting unit 16. These functional units included in the sensor controller 10 are further described later.

As illustrated in FIG. 2, the transmission unit 20 may include a signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in FIG. 2, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in FIG. 2, each of the multiple reception units 30 may include an LNA 32, a mixer 33, an IF unit 34, and an AD conversion unit 35. The reception units 30A to 30D may have the same and/or similar configuration. FIG. 2 schematically illustrates the configuration of only the reception unit 30A as a representative example.

The sensor 5 described above may include, for example, the transmission antennas 25 and the reception antennas 31. The sensor 5 may appropriately include at least any of other functional units such as the sensor controller 10.

The sensor controller 10 included in the electronic device 1 according to the first embodiment is capable of controlling the individual functional units of the electronic device 1 and controlling operations of the entire electronic device 1. To provide control and processing capabilities for executing various functions, the sensor controller 10 may include at least one processor, for example, a CPU (Central Processing Unit). The sensor controller 10 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In the first embodiment, the sensor controller 10 may be configured as, for example, a CPU and a program executed by the CPU. The sensor controller 10 may appropriately include a memory necessary for operations of the sensor controller 10.

The storage unit 40 may store a program executed by the sensor controller 10, a result of processing performed by the sensor controller 10, and so on. The storage unit 40 may also function as a work memory of the sensor controller 10. The storage unit 40 may be, for example, a semiconductor memory or a magnetic disk. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the sensor controller 10 as described above.

In the first embodiment, the storage unit 40 may store various parameters for setting a range in which an object is detected based on a transmission wave T transmitted from the transmission antenna 25 and a reflected wave R received from the reception antenna 31. Such parameters are further described later.

In the electronic device 1 according to the first embodiment, the sensor controller 10 is capable of controlling at least one of the transmission unit 20 or the reception units 30. In this case, the sensor controller 10 may control at least one of the transmission unit 20 or the reception units 30, based on various kinds of information stored in the storage unit 40. In the electronic device 1 according to the first embodiment, the sensor controller 10 may instruct the signal generating unit 21 to generate a signal or may control the signal generating unit 21 to generate a signal.

In accordance with control performed by the sensor controller 10, the signal generating unit 21 generates a signal (transmission signal) to be transmitted as the transmission wave T from each of the transmission antennas 25. When generating a transmission signal, the signal generating unit 21 may allocate a frequency of the transmission signal in accordance with control performed by the sensor controller 10, for example. Specifically, the signal generating unit 21 may allocate a frequency of the transmission signal in accordance with a parameter set by the parameter setting unit 16. For example, the signal generating unit 21 receives frequency information from the sensor controller 10 (the parameter setting unit 16) and generates a signal having a predetermined frequency in a frequency band such as from 77 GHz to 81 GHz, for example. The signal generating unit 21 may include a functional unit such as a voltage control oscillator (VCO), for example.

The signal generating unit 21 may be configured as hardware having the function, for example as a microcomputer, or for example as a processor such as a CPU and a program or the like executed by the processor. Each functional unit described below may also be configured as hardware having the function, for example as a microcomputer if possible, or for example as a processor such as a CPU and a program or the like executed by the processor if possible.

In the electronic device 1 according to the first embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. For example, the sensor controller 10 may set in advance the signal generated by the signal generating unit 21. For example, the storage unit 40 or the like may store in advance the signal generated by the signal generating unit 21. Since a chirp signal used in a technical field such as the radar is known, more detailed description is appropriately simplified or omitted. The signal generated by the signal generating unit 21 is supplied to the synthesizer 22.

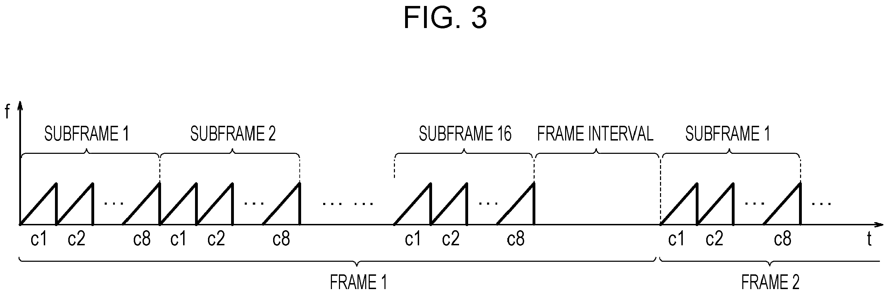

FIG. 3 is a diagram for describing an example of chirp signals generated by the signal generating unit 21.

In FIG. 3, the horizontal axis represents elapsed time, and the vertical axis represents a frequency. In the example illustrated in FIG. 3, the signal generating unit 21 generates linear chirp signals whose frequency changes linearly and periodically. FIG. 3 illustrates chirp signals c1, c2, ..., c8. As illustrated in FIG. 3, the frequency of each chirp signal linearly increases as time elapses.

In the example illustrated in FIG. 3, one subframe includes eight chirp signals c1, c2, ..., c8. That is, each of subframes such as a subframe 1 and a subframe 2 illustrated in FIG. 3 includes eight chirp signals c1, c2, ..., c8. In the example illustrated in FIG. 3, one frame includes 16 subframes such as the subframes 1 to 16. That is, each of frames such as a frame 1 and a frame 2 illustrated in FIG. 3 includes 16 subframes. As illustrated in FIG. 3, a frame interval of a predetermined length may be included between frames. Each single frame illustrated in FIG. 3 may have a length of about 30 ms to 50 ms, for example. Each single frame illustrated in FIG. 3 may have a length of about 30 ms to 50 ms, for example.

In FIG. 3, the frame 2 and subsequent frames may have the same and/or similar configuration. In FIG. 3, the frame 3 and subsequent frames may have the same and/or similar configuration. In the electronic device 1 according to the first embodiment, the signal generating unit 21 may generate a transmission signal as any number of frames. In FIG. 3, an illustration of some chirp signals is omitted. As described above, for example, the storage unit 40 or the like may store a relationship between time and a frequency of the transmission signal generated by the signal generating unit 21.

As described above, the electronic device 1 according to the first embodiment may transmit a transmission signal made up of subframes each including multiple chirp signals. The electronic device 1 according to the first embodiment may transmit a transmission signal made up of frames each including a predetermined number of subframes.

In the description below, the electronic device 1 transmits a transmission signal having the frame structure illustrated in FIG. 3. However, the frame structure illustrated in FIG. 3 is an example. For example, the number of chirp signals included in one subframe is not limited to eight. In the first embodiment, the signal generating unit 21 may generate a subframe including any number of (for example, multiple) chirp signals. The subframe structure illustrated in FIG. 3 is also an example. For example, the number of subframes included in one frame is not limited to 16. In the first embodiment, the signal generating unit 21 may generate a frame including any number of (for example, multiple) subframes. The signal generating unit 21 may generate signals having different frequencies. The signal generating unit 21 may generate multiple discrete signals of bandwidths in which frequencies f are different from each other.

Referring back to the description of FIG. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. For example, the sensor controller 10 may set the frequency selected as the frequency of the transmission wave T to be transmitted from each of the transmission antennas 25. For example, the frequency selected as the frequency of the transmission wave T to be transmitted from each of the transmission antennas 25 may be a frequency selected by the parameter setting unit 16. The frequency selected as the frequency of the transmission wave T to be transmitted from each of the transmission antennas 25 may be stored in the storage unit 40, for example. The signal whose frequency has been increased by the synthesizer 22 is supplied to the phase control unit 23 and the mixer 33. When the multiple phase control units 23 are present, the signal whose frequency has been increased by the synthesizer 22 may be supplied to each of the multiple phase control units 23. When the multiple reception units 30 are present, the signal whose frequency has been increased by the synthesizer 22 may be supplied to the mixer 33 of each of the multiple reception units 30.

Each of the phase control units 23 controls a phase of the transmission signal supplied from the synthesizer 22. Specifically, for example, in accordance with control performed by the sensor controller 10, each of the phase control units 23 may appropriately advance or delay the phase of the signal supplied from the synthesizer 22 to adjust the phase of the transmission signal. In this case, based on a difference between paths of the transmission waves T to be transmitted from the multiple transmission antennas 25, the phase control units 23 may adjust the phases of the respective transmission signals. The phase control units 23 appropriately adjust the phases of the respective transmission signals, so that the transmission waves T transmitted from the respective transmission antennas 25 enhance with each other in a predetermined direction to form a beam (beamforming). In this case, for example, the storage unit 40 may store a correlation between a direction of beamforming and amounts of phase by which the respective transmission signals transmitted by the respective transmission antennas 25 are to be controlled. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the sensor controller 10, for example. When the sensor 5 includes the multiple transmission antennas 25, each of the multiple amplifiers 24 may amplify power (electric power) of the transmission signal supplied from a respective one of the multiple phase control units 23 in accordance with control performed by the sensor controller 10, for example. Since the technology for amplifying power of a transmission signal is already known, more detailed description is omitted. The amplifier 24 is connected to the transmission antenna 25.

The transmission antenna 25 outputs (transmits), as the transmission wave T, the transmission signal amplified by the amplifier 24. When the sensor 5 includes the multiple transmission antennas 25, each of the multiple transmission antennas 25 may output (transmit), as the transmission wave T, the transmission signal amplified by a respective one of the multiple amplifiers 24. Since the transmission antennas 25 can have a configuration that is the same as and/or similar to the configuration of transmission antennas for use in the known radar technology, more detailed description is omitted.

The electronic device 1 according to the first embodiment, which includes the transmission antennas 25, is capable of transmitting transmission signals (for example, transmission chirp signals) as the transmission waves T from the respective transmission antennas 25 in this manner. At least one of the functional units of the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as a drone, each of the transmission antennas 25 may transmit the transmission wave T to outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the transmission antennas 25 with a member such as the radar cover can reduce a risk of the transmission antennas 25 being damaged or malfunctioning because of a contact with an external object. The radar cover and the housing may also be referred to as a radome.

FIG. 2 illustrates an example of the electronic device 1 that includes two transmission antennas 25. However, in the first embodiment, the electronic device 1 may include any number of transmission antennas 25. On the other hand, in the first embodiment, the electronic device 1 may include multiple transmission antennas 25 when the transmission waves T transmitted from the respective transmission antennas 25 form a beam in a predetermined direction. In the first embodiment, the electronic device 1 may include multiple transmission antennas 25. In this case, the electronic device 1 may include the multiple phase control units 23 and the multiple amplifiers 24 to correspond to the multiple transmission antennas 25. Each of the multiple phase control units 23 may control the phase of a respective one of the multiple transmission waves supplied from the synthesizer 22 and to be transmitted from the respective transmission antennas 25. Each of the multiple amplifiers 24 may amplify power of a respective one of the multiple transmission signals to be transmitted from the respective transmission antennas 25. In this case, the sensor 5 may include the multiple transmission antennas. As described above, when the electronic device 1 illustrated FIG. 2 includes the multiple transmission antennas 25, the electronic device 1 may include multiple functional units necessary for transmitting the transmission waves T from the multiple transmission antennas 25.

The reception antenna 31 receives the reflected wave R. The reflected wave R is the transmission wave T reflected off the predetermined object 200. As the reception antenna 31, multiple antennas such as the reception antennas 31A to 31D, for example, may be included. Since the reception antennas 31 can have a configuration that is the same as and/or similar to the configuration of reception antennas for use in the known radar technology, more detailed description is omitted. The reception antenna 31 is connected to the LNA 32. A reception signal based on the reflected wave R received by the reception antenna 31 is supplied to the LNA 32.

The electronic device 1 according to the first embodiment can receive, from each of the multiple reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the reception antennas 31 with a member such as the radar cover can reduce a risk of the reception antennas 31 being damaged or malfunctioning because of a contact with an external object. The radar cover and the housing may also be referred to as a radome.

When the reception antenna 31 is installed near the transmission antenna 25, these reception antenna 31 and transmission antenna 25 may be collectively included in one sensor 5. That is, for example, one sensor 5 may include at least one transmission antenna 25 and at least one reception antenna 31. For example, one sensor 5 may include the multiple transmission antennas 25 and the multiple reception antennas 31. In such a case, one radar sensor may be covered with a cover member such as one radar cover, for example.

The LNA 32 amplifies, with low noise, the reception signal based on the reflected wave R received by the reception antenna 31. The LNA 32 may be a low-noise amplifier and amplifies, with low noise, the reception signal supplied from the reception antenna 31. The reception signal amplified by the LNA 32 is supplied to the mixer 33.

The mixer 33 mixes (multiplies) the reception signal having a radio frequency (RF) and supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to decrease the frequency of the beat signal to an intermediate frequency (IF). The beat signal whose frequency has been decreased by the IF unit 34 is supplied to the AD conversion unit 35.

The AD conversion unit 35 digitizes the analog beat signal supplied from the IF unit 34. The AD conversion unit 35 may be configured as any analog-to-digital conversion circuit (Analog-to-Digital Converter (ADC)). The digitized beat signal obtained by the AD conversion unit 35 is supplied to the distance FFT processing unit 11 of the sensor controller 10. When the multiple reception units 30 are present, the digitized beat signals obtained by the respective AD conversion units 35 may be supplied to the distance FFT processing unit 11.

The distance FFT processing unit 11 estimates a distance between the mobility device 100 equipped with the electronic device 1 and the object 200, based on the beat signals supplied from the respective AD conversion units 35. The distance FFT processing unit 11 may include a processing unit that performs fast Fourier transform, for example. In this case, the distance FFT processing unit 11 may be configured as a circuit, chip, or the like of any type that performs fast Fourier transform (FFT).

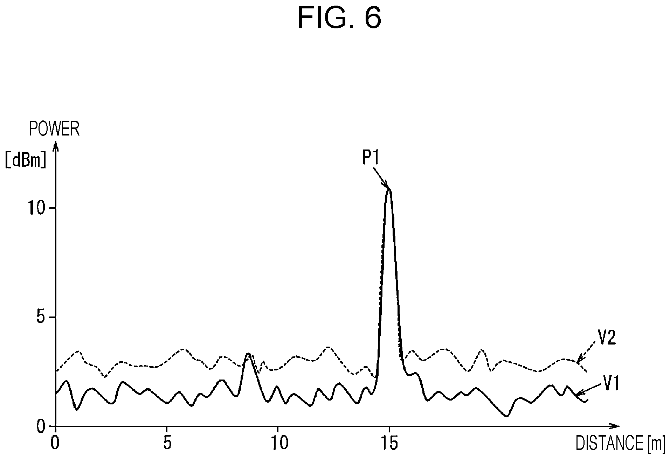

The distance FFT processing unit 11 performs FFT processing (hereinafter, appropriately referred to as "distance FFT processing") on the digitized beat signals obtained by the AD conversion units 35. For example, the distance FFT processing unit 11 may perform FFT processing on complex signals supplied from the AD conversion units 35. The digitized beat signals obtained by the AD conversion units 35 can be represented as temporal changes in signal intensity (power). The distance FFT processing unit 11 performs FFT processing on such a beat signal, so that the beat signal can be represented as a signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, a method for determining that an object (reflecting object) that reflects a transmission wave is located when a peak value that is equal to or greater than a threshold is detected from the average power or amplitude of a disturbance signal, such as a constant false alarm rate (CFAR) detection process, is known. In the present disclosure, description is given below on the assumption that the threshold described above is defined as an absolute value. However, the threshold applicable to the embodiments of the present disclosure is not limited to the threshold defined as an absolute value, and may be defined as a relative value (for example, a difference between P1 and V2 illustrated in FIG. 6).

As described above, the electronic device 1 according to the first embodiment can detect the object 200 that reflects the transmission wave T, based on the transmission signal transmitted as the transmission wave T and the reception signal received as the reflected wave R.

The distance FFT processing unit 11 can estimate a distance to a predetermined object, based on one chirp signal (for example, c1 illustrated in FIG. 3). That is, the electronic device 1 can measure (estimate) the distance L illustrated in FIG. 1 by performing the distance FFT processing. Since a technique for measuring (estimating) a distance to a predetermined object by performing FFT processing on a beat signal is known, more detailed description is appropriately simplified or omitted. The result (for example, distance information) of the distance FFT processing performed by the distance FFT processing unit 11 may be supplied to the velocity FFT processing unit 12. The result of the distance FFT processing performed by the distance FFT processing unit 11 may also be supplied to the object detecting unit 14.

The velocity FFT processing unit 12 estimates a relative velocity between the mobility device 100 equipped with the electronic device 1 and the object 200, based on the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured as a circuit, chip, or the like of any type that performs fast Fourier transform (FFT).

The velocity FFT processing unit 12 further performs FFT processing (hereinafter, appropriately referred to as "velocity FFT processing") on the beat signals on which the distance FFT processing unit 11 has performed the distance FFT processing. For example, the velocity FFT processing unit 12 may perform FFT processing on the complex signals supplied from the distance FFT processing unit 11. The velocity FFT processing unit 12 can estimate a relative velocity to the predetermined object, based on a subframe (for example, the subframe 1 illustrated in FIG. 3) including chirp signals. When the distance FFT processing is performed on the beat signals in the above-described manner, multiple vectors can be generated. The velocity FFT processing unit 12 can estimate a relative velocity to the predetermined object by determining a phase of a peak in a result of the velocity FFT processing performed on these multiple vectors. That is, the electronic device 1 can measure (estimate) a relative velocity between the mobility device 100 and the predetermined object 200 illustrated in FIG. 1 by performing the velocity FFT processing. Since a technique for measuring (estimating) a relative velocity to a predetermined object by performing velocity FFT processing on a result of distance FFT processing is known, more detailed description is appropriately simplified or omitted. The result (for example, velocity information) of the velocity FFT processing performed by the velocity FFT processing unit 12 may be supplied to the angle-of-arrival estimating unit 13. The result of the velocity FFT processing performed by the velocity FFT processing unit 12 may also be supplied to the object detecting unit 14.

The angle-of-arrival estimating unit 13 estimates a direction from which the reflected wave R arrives from the predetermined object 200, based on the result of the velocity FFT processing performed by the velocity FFT processing unit 12. The electronic device 1 can estimate the direction from which the reflected wave R arrives by receiving the reflected wave R from the multiple reception antennas 31. For example, the multiple reception antennas 31 are arranged at a predetermined interval. In this case, the transmission wave T transmitted from the transmission antenna 25 is reflected off the predetermined object 200 to become the reflected wave R. Each of the multiple reception antennas 31 arranged at the predetermined interval receives the reflected wave R. The angle-of-arrival estimating unit 13 can estimate the direction from which the reflected wave R arrives at each of the multiple reception antennas 31, based on the phase of the reflected wave R received by the reception antenna 31 and a difference in path of the reflected wave R. That is, the electronic device 1 can measure (estimate) the angle of arrival θ illustrated in FIG. 1, based on the result of the velocity FFT processing.

Various techniques for estimating the direction from which the reflected wave R arrives based on a result of velocity FFT processing have been proposed. For example, known direction-of-arrival estimation algorithms include MUSIC (MUltiple Signal Classification) and ESPRIT (Estimation of Signal Parameters via Rotational Invariance Technique). Thus, more detailed description of the known techniques is appropriately simplified or omitted. Information (angle information) of the angle of arrival θ estimated by the angle-of-arrival estimating unit 13 may be supplied to the object detecting unit 14.

The object detecting unit 14 detects an object located in a range in which the transmission waves T are transmitted, based on the information supplied from at least any of the distance FFT processing unit 11, the velocity FFT processing unit 12, or the angle-of-arrival estimating unit 13. The object detecting unit 14 may perform detection of an object by performing, for example, clustering processing based on the supplied distance information, velocity information, and angle information. For example, a known algorithm used in clustering of data includes DBSCAN (Density-based spatial clustering of applications with noise). In the clustering processing, for example, average power of points constituting the detected object may be calculated. The distance information, the velocity information, the angle information, and power information of the object detected by the object detecting unit 14 may be supplied to the detection range determining unit 15. The distance information, the velocity information, the angle information, and the power information of the object detected by the object detecting unit 14 may be supplied to the controller 50.

The detection range determining unit 15 determines a range (hereinafter, also referred to as an "object detection range") in which an object that reflects the transmission wave T is to be detected based on the transmission signal and the reception signal. The detection range determining unit 15 may determine multiple object detection ranges, based on an operation or the like performed by an operator of the mobility device 100 equipped with the electronic device 1, for example. The detection range determining unit 15 may determine the multiple object detection ranges, based on a change in an operation state of a propeller (rotor) of the mobility device 100, for example. The detection range determining unit 15 may determine multiple object detection ranges, based on a result of detection of an object performed by the object detecting unit 14.

The parameter setting unit 16 sets various parameters that define a transmission signal and a reception signal with which an object that reflects the transmission wave T as the reflected wave R is to be detected. That is, the parameter setting unit 16 sets various parameters for transmitting the transmission wave T from each transmission antenna 25 and various parameters for receiving the reflected wave R from each reception antenna 31.

In particular, in the first embodiment, the parameter setting unit 16 may set various parameters related to transmission of the transmission wave T and reception of the reflected wave R in order to detect an object in the object detection range described above. For example, the parameter setting unit 16 may define a range or the like in which the reflected wave R is desirably received in order to receive the reflected wave R and detect the object in the object detection range. For example, the parameter setting unit 16 may define a range or the like to which a beam of the transmission waves T is desirably directed in order to detect an object located in the object detection range by transmitting the transmission waves T from the multiple transmission antennas 25. The parameter setting unit 16 may also set various parameters for transmitting the transmission wave T and receiving the reflected wave R.

The various parameters set by the parameter setting unit 16 may be supplied to the signal generating unit 21. Thus, the signal generating unit 21 can generate the transmission signal to be transmitted as the transmission waves T, based on the various parameters set by the parameter setting unit 16. The various parameters set by the parameter setting unit 16 may be supplied to the object detecting unit 14. Thus, the object detecting unit 14 can perform object detection processing in the object detection range determined based on the various parameters set by the parameter setting unit 16.

The controller 50 included in the electronic device 1 according to the first embodiment is capable of controlling the individual functional units of the electronic device 1 and controlling operations of the entire electronic device 1. The controller 50 included in the electronic device 1 according to the first embodiment may control functional units of the mobility device 100 and control operations of the entire mobility device 100. To provide control and processing capabilities for executing various functions, the controller 50 may include at least one processor, for example, a CPU (Central Processing Unit). The controller 50 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In the first embodiment, the controller 50 may be configured as, for example, a CPU and a program executed by the CPU. The controller 50 may appropriately include a memory necessary for operations of the controller 50. At least part of the functions of the sensor controller 10 may be functions of the controller 50, or at least part of the functions of the controller 50 may be functions of the sensor controller 10.

The electronic device 1 illustrated in FIG. 2 includes the two transmission antennas 25 and the four reception antennas 31. However, the electronic device 1 according to the first embodiment may include any number of transmission antennas 25 and any number of reception antennas 31. For example, by including the two transmission antennas 25 and the four reception antennas 31, the electronic device 1 can be regarded to include a virtual antenna array that is virtually constituted by eight antennas. As described above, the electronic device 1 may receive the reflected wave R of 16 subframes illustrated in FIG. 3 by using, for example, the eight virtual antennas.

A configuration of the electronic device 1 according to the first embodiment that is installed in the mobility device 100 such as a drone is described.

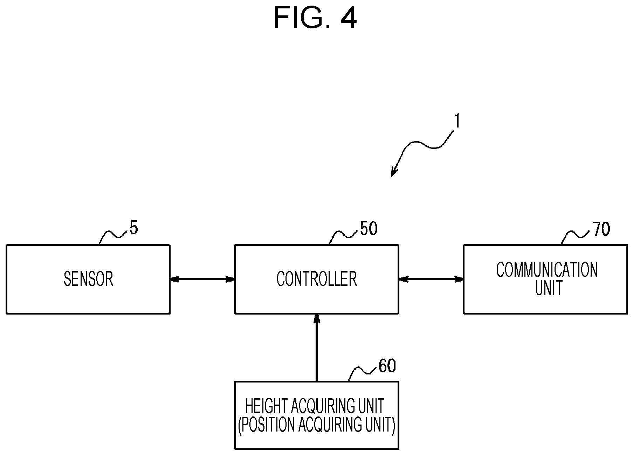

FIG. 4 is a functional block diagram schematically illustrating the configuration of the electronic device 1 according to the first embodiment that is installed in the mobility device 100 such as a drone. The electronic device 1 illustrated in FIG. 2 includes the sensor 5 and the controller 50. The sensor 5 and the controller 50 illustrated in FIG. 4 may be the same as the sensor 5 and the controller 50 illustrated in FIG. 2, respectively. As illustrated in FIG. 4, when the electronic device 1 is installed in the mobility device 100 such as a drone, the electronic device 1 may further include a height acquiring unit 60 and a communication unit 70 in addition to the sensor 5 and the controller 50 illustrated in FIG. 2.

The sensor 5 and the controller 50 illustrated in FIG. 4 are as described in FIG. 2.

The height acquiring unit 60 acquires information related to a height of the position where the height acquiring unit 60 is located. The height of the position where the height acquiring unit 60 is located may be, for example, a height of the position of the sensor 5, the electronic device 1, or the mobility device 100 such as a drone.

The height acquiring unit 60 to be employed may be any member having a function with which the information related to the height of the position where the height acquiring unit 60 is located is acquirable. For example, the height acquiring unit 60 may include a member having a function of having a function of detecting a distance to a ground surface, based on a technique such as RADAR or LIDAR described above. For example, the height acquiring unit 60 may include a member having a function of having a function of detecting the distance to the ground surface, based on a technique using an ultrasonic wave or infrared. In the above case, the height acquiring unit 60 may be installed with a sensor facing the ground surface (downward) to detect the distance to the ground surface.

The height acquiring unit 60 may acquire position information including the height where the height acquiring unit 60 is located, based on a technology such as GPS, for example. The height acquiring unit 60 may acquire position information, based on a GNSS (Global Navigation Satellite System) technology or the like. The GNSS technology may include any of satellite-based positioning systems such as the GPS (Global Positioning System), the GLONASS, the Galileo, and the Quasi-Zenith Satellite System (QZSS), for example. The height acquiring unit 60 may be, for example, a position information income device such as a GPS module. The height acquiring unit 60 may acquire information related the height where the height acquiring unit 60 is located, based on a technology such as an atmospheric pressure sensor, for example.

When the information related to the height acquired by the height acquiring unit 60 is information indicating a position such as an altitude or an altitude above sea level, for example, and does not indicate a distance to the ground surface, the height acquiring unit 60 may transmit the information related to the height to an external server or the like along with position information of that point to convert the information related to the height into the distance to the ground surface. In this case, the external server can convert the height acquired by the height acquiring unit 60 into the position information indicating the distance to the ground surface with reference to the information of the altitude or the altitude above the sea level of the ground surface of each point.

As described above, the information acquired by the height acquiring unit 60 includes the information related to the height of the position where the height acquiring unit 60 is located, and may further include, for example, latitude information and longitude information as appropriate. The information acquired by the height acquiring unit 60 is supplied to the controller 50. Based on the information supplied from the height acquiring unit 60, the controller 50 can grasp the current height (for example, the distance from the ground surface) of the electronic device 1 (or the sensor 5 or the mobility device 100).

The communication unit 70 is an interface for wired or wireless communication. The communication scheme carried out by the communication unit 70 according to the first embodiment may be based on a wireless communication standard. Examples of the wireless communication standard include cellular phone communication standards such as 2G, 3G, 4G, and 5G. Examples of the cellular phone communication standard include LTE (Long Term Evolution), W-CDMA (Wideband Code Division Multiple Access), CDMA2000, PDC (Personal Digital Cellular), GSM (registered trademark) (Global System for Mobile communications), and PHS (Personal Handy-phone System). Examples of the wireless communication standard include WiMAX (Worldwide Interoperability for Microwave Access), IEEE 802.11, Bluetooth (registered trademark), IrDA (Infrared Data Association), and NFC (Near Field Communication). The communication unit 70 can support one or more communication standards among the aforementioned communication standards.

The communication unit 70 transmits and receives various kinds of data by performing wired communication and/or wireless communication with an information processing apparatus such as an external server, for example. The communication performed by the communication unit 70 may be at least one of transmission of various kinds of data or reception of various kinds of data. The communication unit 70 can transmit, for example, the information related to the height of the electronic device 1 acquired by the height acquiring unit 60 to an information processing apparatus such as an external server, for example. The communication unit 70 can also transmit, for example, at least any of various kinds of information detected by the sensor 5 to an information processing apparatus such as an external server, for example. The communication unit 70 can also receive, for example, various kinds of information from an information processing apparatus such as an external server.

An operation of the electronic device 1 according to the first embodiment is described.

The applicant has found that in an area where various objects such as buildings, utility poles, power lines and/or antennas are densely located, for example, such as on the ground surface in an urban area, the magnitude of the noise floor varies considerably depending on the height from the ground surface. When whether an object is detected is determined by comparing power of a reflected wave with a predetermined threshold (fixed value) as in, for example, the CFAR detection process in such an environment, a risk of missed detection and/or false detection occurs. For example, if the threshold for use in detection of an object remains low for an area where the noise floor is relatively high, noise that is not the power of the reflected wave exceeds the threshold and thus a risk of detecting an object even though no object is present (false detection) occurs. On the other hand, if the threshold for use in detection of an object remains high for an area where the noise floor is relatively low, the power of the reflected wave does not exceed the threshold even at the peak and thus a risk of failing to detect an object even though an object is present (missed detection) occurs.

In view of the circumstances above, when the technology such as a general millimeter-wave radar is employed in a mobility device that may move in the height direction such as a drone, a risk of missed detection and/or false detection occurs depending on the environment. Accordingly, the electronic device 1 according to one embodiment changes the threshold for use in detection of an object in accordance with the height of the electronic device 1.

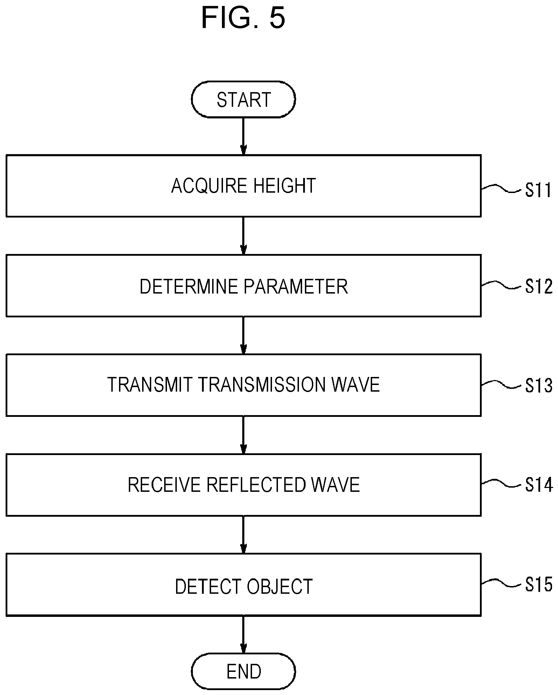

FIG. 5 is a flowchart for describing an operation of the electronic device 1 according to the first embodiment.

The operation illustrated in FIG. 5 may start, for example, while the mobility device 100 such as a drone equipped with the electronic device 1 according to the first embodiment is flying.

In response to the start of the operation illustrated FIG. 5, the controller 50 of the electronic device 1 according to the first embodiment acquires a height of the electronic device 1 (step S11). In step S11, the controller 50 may acquire the height of the electronic device 1 from the height acquiring unit 60.

After acquiring the height of the electronic device 1 in step S11, the controller 50 determines, in accordance with the acquired height of the electronic device 1, a parameter to be used in determination as to whether an object that reflects a transmission wave is detected (step S12). The parameter determined in step S12 may be a threshold to be compared with the power of the reflected wave to determine whether an object is detected, like a threshold in the CFAR detection process, for example. Before the electronic device 1 performs the processing of step S12, for example, a correspondence between the height of the electronic device 1 and a parameter to be used in determination as to whether an object is detected may be defined and stored in the storage unit 40 or the like in advance. In one embodiment, the electronic device 1 may calculate the parameter determined in step S12 through an arithmetic operation. In either case, the electronic device 1 may determine an appropriate parameter (threshold) that allows the power of the reflected wave to be distinguished from the noise floor, in accordance with the height of the electronic device 1.

In general, as the electronic device 1 is closer to the ground surface, an influence of various buildings or the like increases and the noise floor tends to be relatively high. Conversely, as the electronic device 1 is farther from the ground surface, an influence of various buildings or the like decreases and the noise floor tends to be relatively low. Accordingly, if the height of the electronic device 1 is relatively low (the electronic device 1 is close to the ground surface), the controller 50 may determine a relatively large threshold as the parameter to be used in determination as to whether an object is detected. On the other hand, if the height of the electronic device 1 is relatively high (the electronic device 1 is far from the ground surface), the controller 50 may determine a relatively small threshold as the parameter to be used in determination as to whether an object is detected.

After the parameter is determined in step S12, the sensor controller 10 of the electronic device 1 transmits a transmission wave from the transmission antenna 25 (step S13). The transmission wave transmitted by the electronic device 1 in step S13 may be, for example, chirp signals illustrated in FIG. 3.

After transmitting the transmission wave in step S13, the sensor controller 10 receives, from the reception antenna 31, a reflected wave that is the transmission wave reflected off an object, for example (step S14).

After receiving the reflected wave in step S14, the sensor controller 10 detects the object that reflects the transmission wave, based on a transmission signal and a reception signal (step S15). In step S15, the sensor controller 10 determines whether an object that reflects the transmission wave is detected, based on the parameter determined in step S12. Specifically, if the power of the reflected wave exceeds the parameter (threshold) determined in step S12, the sensor controller 10 determines that an object is detected at that distance. On the other hand, if the power of the reflected wave does not exceed the parameter (threshold) determined in step S12, the sensor controller 10 determines that no object is detected at that distance.

As described above, the electronic device 1 can generate a beat signal, based on the transmission signal and the reception signal. The sensor controller 10 can determine that an object (reflecting object) that reflects a transmission wave is located, by performing the distance FFT processing or the like on the beat signal. Thus, the electronic device 1 can detect the object that reflects the transmission wave, based on the transmission signal transmitted as the transmission wave and the reception signal received as the reflected wave that is the transmission wave having been reflected.

As described above, the electronic device 1 according to the first embodiment determines a parameter to be used in determination as to whether an object that reflects a transmission wave is detected, based on a height of the electronic device 1. The height of the electronic device 1 may be, for example, a height of the electronic device 1 from a ground surface or a position of the electronic device 1 in the vertical direction. If the threshold is defined as an absolute value and, for example, V2 denotes reflected power as illustrated in FIG. 6, a large threshold may be set. On the other hand, if the threshold is defined as a relative value, for example, like a difference between P1 and V2 illustrated in FIG. 6 and, for example, V2 denotes the reflected power as illustrated in FIG. 6, a small threshold may be set.

FIG. 6 is a graph for describing an example of the operation of the electronic device 1 according to the first embodiment.

For example, suppose that the mobility device 100 (drone) equipped with the electronic device 1 according to the first embodiment lowers its altitude from a relatively high position to a relatively low position. Suppose that V1 illustrated in FIG. 6 denotes the power of the reflected wave that is the transmission wave that has been transmitted forward from the mobility device 100 and reflected off a predetermined object at the relatively high position. Suppose that V2 illustrated in FIG. 6 denotes the power of a reflected wave that is a transmission wave that has been transmitted forward from the mobility device 100 and reflected off a predetermined object at the relatively low position.

In V1 and V2 illustrated in FIG. 6, the power of the reflected wave reflected off the predetermined object peaks at P1, and the rest of the regions may be regarded as the noise floor. As illustrated in FIG. 6, the noise floor for the relatively high position (corresponding to V1) is detected to be low, and the noise floor for the relatively low position (corresponding to V2) is detected to be high. In such a case, the parameter (threshold) to be used in determination as to whether an object is detected may be set to be larger at the altitude at which the power of the reflected wave is V2 than at the altitude at which the power of the reflected wave is V1. The parameter (threshold) to be used in determination as to whether an object is detected may be set to be smaller at the altitude at which the power of the reflected wave is V1 than at the altitude at which the power of the reflected wave is V2. If the threshold is defined as an absolute value and, for example, V2 denotes reflected power as illustrated in FIG. 6, a large threshold may be set. On the other hand, if the threshold is defined as a relative value, for example, like a difference between P1 and V2 illustrated in FIG. 6 and, for example, V2 denotes the reflected power as illustrated in FIG. 6, a small threshold may be set.

The electronic device 1 according to the first embodiment determines the parameter to be used in determination as to whether an object is detected, based on the height of the electronic device 1. Thus, the electronic device 1 according to the first embodiment may have an improved object detection accuracy. In particular, the electronic device 1 according to the first embodiment may have an improved object detection accuracy in the height direction.

### (Second Embodiment)

An electronic device according to a second embodiment is described.

The electronic device according to the second embodiment can be implemented with the same configuration as that of the electronic device 1 according to the first embodiment described above. An operation of the electronic device 1 according to the second embodiment is partially changed from the operation of the electronic device 1 according to the first embodiment described above. Thus, the same or similar description as that of the electronic device 1 according to the first embodiment described above is appropriately simplified or omitted below.

The electronic device 1 according to the second embodiment acquires, as sensing information, a noise level at a height of the electronic device 1. The electronic device 1 according to the second embodiment sequentially updates the sensing information averaged for each height section of the electronic device 1. The electronic device 1 according to the second embodiment detects an object by using a parameter corresponding to the averaged sensing information that is sequentially updated.

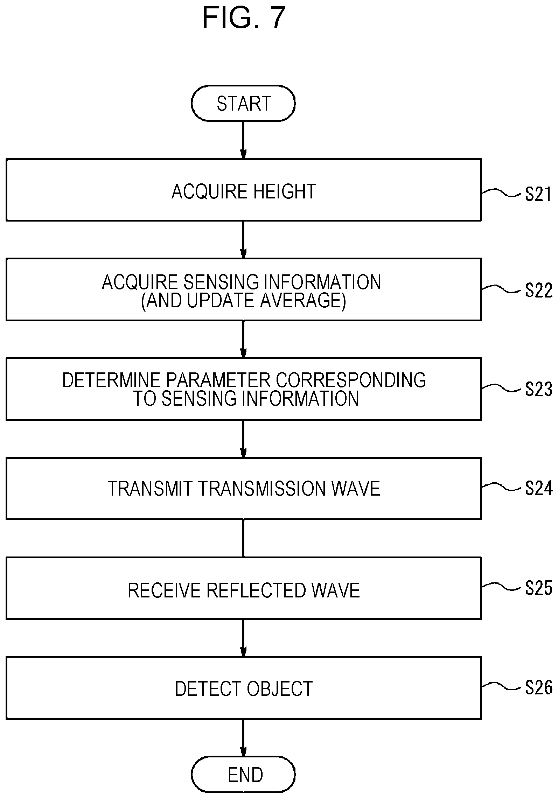

FIG. 7 is a flowchart for describing an operation of the electronic device 1 according to the second embodiment.

As in the first embodiment, the operation illustrated in FIG. 7 may start, for example, while the mobility device 100 such as a drone equipped with the electronic device 1 according to the second embodiment is flying.

In response to the start of the operation illustrated FIG. 7, the controller 50 of the electronic device 1 according to the second embodiment acquires a height of the electronic device 1 (step S21). The operation of step S21 may be performed in the same and/or similar manner as in step S11 illustrated in FIG. 5. The electronic device 1 may store the height of the electronic device 1 acquired in step S21 in the storage unit 40, for example.

After acquiring the height of the electronic device 1 in step S21, the controller 50 acquires the sensing information based on a transmission signal and a reception signal at the position of the electronic device 1 (step S22). The sensing information acquired in step S22 may be a noise level of a signal based on the transmission signal and the reception signal, a detection object SNR (signal-to-noise ratio or signal quality), or the like. That is, the sensing information may be related to a noise level obtained when the electronic device 1 detects an object. In step S22, the electronic device 1 may store the sensing information acquired in step S22 in the storage unit 40, for example. The electronic device 1 may store the sensing information acquired in step S22 in the storage unit 40 in association with the height of the electronic device 1 acquired in step S21.

After acquiring the sensing information in step S22, the controller 50 determines a parameter corresponding to the acquired sensing information, as the parameter to be used in determination as to whether an object that reflects a transmission wave is detected (step S23). The parameter determined in step S23 may be a threshold to be compared with the power of the reflected wave to determine whether an object is detected, like a threshold in the CFAR detection process, for example. Before the electronic device 1 performs the processing of step S23, for example, a correspondence between the sensing information at the height of the electronic device 1 and a parameter to be used in determination as to whether an object is detected may be defined and stored in the storage unit 40 or the like in advance. In one embodiment, the electronic device 1 may calculate the parameter determined in step S23 through an arithmetic operation. In either case, the electronic device 1 may determine an appropriate parameter (threshold) that allows the power of the reflected wave to be distinguished from the noise floor, in accordance with the height of the electronic device 1.

After the parameter is determined in step S23, the sensor controller 10 of the electronic device 1 may transmit a transmission wave from the transmission antenna 25 (step S24), receive a reflected wave of the transmission wave (step S25), and detect an object (step S26). The operation of steps S24 to S26 may be performed in the same and/or similar manner as in steps S13 to S 15 illustrated in FIG. 5, respectively. In step S26, the sensor controller 10 determines whether an object that reflects the transmission wave is detected, based on the parameter determined in step S23.

As described above, the electronic device 1 according to the second embodiment may acquire sensing information based on at least one of the transmission signal or the reception signal at the height of the electronic device 1. In this case, the electronic device 1 according to the second embodiment may determine a parameter corresponding to the sensing information, as the parameter to be used in determination as to whether an object that reflects the transmission wave is detected. The sensing information may include information related to a noise level during object detection at the height of the electronic device 1.

The operation illustrated in FIG. 7 may be performed repeatedly at appropriate timings regularly or irregularly. In this case, the height of the electronic device 1 acquired in step S21 may change from moment to moment. The sensing information acquired in step S22 may change in response to the change in the height of the electronic device 1. The sensing information acquired in step S22 may change in response to a change in the surrounding environment even if the height of the electronic device 1 does not change.

Accordingly, the electronic device 1 according to the second embodiment may average the noise power based on the acquired sensing information, for each height or each height section of the electronic device 1. The electronic device 1 according to the second embodiment may store the information thus averaged in the storage unit 40, for example.

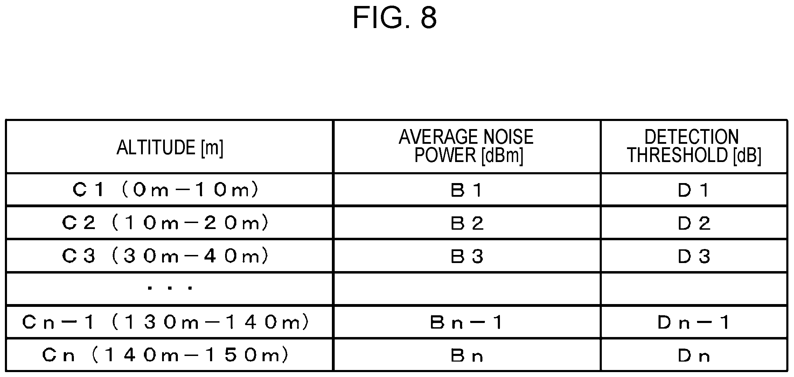

FIG. 8 is a diagram illustrating the noise power averaged for each height section of the electronic device 1 as a table. The electronic device 1 according to the second embodiment may store the table as illustrated in FIG. 8 in the storage unit 40, for example.

FIG. 8 illustrates an example in which a range of the height from the ground surface, which is from 0 m to 150 m, is sectioned by 10 m as height sections of the electronic device 1. That is, an altitude section C1 illustrated in FIG. 8 indicates a section in which the height from the ground surface is from 0 m to 10 m. An altitude section C2 illustrated in FIG. 8 indicates a section in which the height from the ground surface is from 10 m to 20 m. An altitude section C3 illustrated in FIG. 8 indicates a section in which the height from the ground surface is from 30 m to 40 m.

The electronic device 1 according to the second embodiment sequentially stores, in the storage unit 40, the noise level (for example, an instantaneous value of noise power) based on the sensing information acquired in each of the height sections illustrated in FIG. 8, for example. For example, suppose that at a certain time point, the electronic device 1 acquires a height of 5 m in step S21 and receives a noise power (instantaneous value) of I1 as the sensing information in step S22. In this case, the sensor controller 10 stores the noise power (instantaneous value) I1 in an area for the altitude section C1 in the storage unit 40. Suppose that at the next time point, the electronic device 1 acquires a height of 12 m in step S21, and receives a noise power (instantaneous value) of I2 as the sensing information in step S22. In this case, the sensor controller 10 stores the noise power (instantaneous value) I2 in an area for the altitude section C2 in the storage unit 40.

Once the instantaneous value of the noise power is stored in each height section in this manner, the sensor controller 10 may average, for each height section, the instantaneous values of the noise power in the height section. For example, if only one instantaneous value of the noise power is stored in the area for the altitude section C1 illustrated in FIG. 8, the instantaneous value of the noise power may be used as an average noise power B1 in the altitude section C1. For example, if five instantaneous values of the noise power are stored in the area for the altitude section C2 illustrated in FIG. 8, the five instantaneous values of the noise power may be averaged and the resultant average may be used as an average noise power B2 in the altitude section C2.

Each time the operation of steps S21 and S22 of FIG. 7 is repeated, the electronic device 1 acquires the instantaneous value of the noise power in any of the height sections illustrated in FIG. 8. Thus, as illustrated in step S22 of FIG. 7, the electronic device 1 may update the average noise power, based on the instantaneous value of the noise power in each section at the time point of acquiring the sensing information. In this way, the average noise power in each height section illustrated in FIG. 8 is updated in accordance with the latest circumstance all the time in consideration of the past history.

In this case, as illustrated in FIG. 8, a detection threshold corresponding to the average noise power in each height section may be determined as the parameter to be used in determination as to whether an object that reflects a transmission wave is detected (step S23 in FIG. 7). In the electronic device 1 according to one embodiment, the storage unit 40 may store a suitable detection threshold corresponding to each average noise power updated as appropriate. This allows the detection threshold suitable for the average noise power at the height of the electronic device 1 at the current time point to be used as the parameter to be used in determination as to whether an object that reflects a transmission wave is detected. Also in the present embodiment, if the threshold is defined as an absolute value and, for example, V2 denotes reflected power as illustrated in FIG. 6, a large threshold may be set. On the other hand, if the threshold is defined as a relative value, for example, like a difference between P1 and V2 illustrated in FIG. 6 and, for example, V2 denotes the reflected power as illustrated in FIG. 6, a small threshold may be set.

As described above, the electronic device 1 according to the second embodiment may determine a parameter corresponding to an average of the sensing information in a predetermined height section of the electronic device 1, as the parameter to be used in determination as to whether an object that reflects a transmission wave is detected. The electronic device 1 according to the second embodiment may update the average of the sensing information in the predetermined height section of the electronic device 1 by acquisition of the sensing information.

The electronic device 1 according to the second embodiment determines the parameter to be used in determination as to whether an object is detected, based on a noise power corresponding to the height of the electronic device 1. Thus, the electronic device 1 according to the second embodiment may have an improved object detection accuracy. In particular, the electronic device 1 according to the second embodiment may have an improved object detection accuracy in the height direction.

### (Third Embodiment)

A system according to a third embodiment is described.

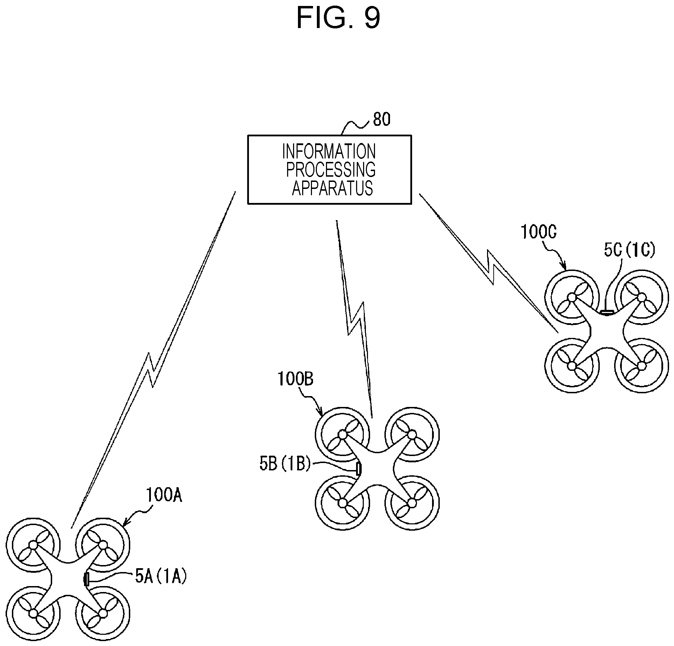

FIG. 9 is a diagram schematically illustrating an example of a configuration of the system according to the third embodiment. As illustrated in FIG. 9, the system according to the third embodiment includes the electronic devices 1 and an information processing apparatus 80. The electronic devices 1 included in the system according to the third embodiment are referred to as the electronic devices 1 according to the third embodiment. The information processing apparatus 80 included in the system according to the third embodiment is referred to as the information processing apparatus 80 according to the third embodiment.

As illustrated in FIG. 9, an electronic device 1A including a sensor 5A is installed on a mobility device 100A. An electronic device 1B including a sensor 5B is installed on a mobility device 100B. An electronic device 1C including a sensor 5C is installed on a mobility device 100C. When the mobility devices 100A, 100B, and 100C are not distinguished from one another, the mobility devices 100A, 100B, and 100C are simply referred to as "mobility devices 100" below. When the sensors 5A, 5B, and 5C are not distinguished from one another, the sensors 5A, 5B, and 5C are simply referred to as "sensors 5". When the electronic devices 1A, 1B, and 1C are not distinguished from one another, the electronic devices 1A, 1B, and 1C are simply referred to as "electronic devices 1". In each of the electronic devices 1 according to the third embodiment, the height acquiring unit 60 can acquire not only the height of the electronic device 1 but also the position of the electronic device 1. Other than the foregoing, each of the electronic devices 1 according to the third embodiment may be the same as that described in FIGs. 2 and 4.

The system illustrated in FIG. 9 presents an example in which the system includes three mobility devices 100 each equipped with the electronic device 1. However, the system according to the third embodiment may include at least one mobility device 100 equipped with the electronic device 1. As illustrated in FIG. 9, each of the electronic devices 1 installed on the respective mobility devices 100 can wirelessly communicate with the information processing apparatus 80. Through such communication, each of the electronic devices 1 and the information processing apparatus 80 can exchange various kinds of data.

As described later, the information processing apparatus 80 may be any information processing apparatus (for example, a computer) such as a server of various kinds or a cloud server. Each of the electronic devices 1 and the information processing apparatus 80 may be connected to each other via a network, for example. The system illustrated in FIG. 9 presents an example in which the system includes only one information processing apparatus 80. However, the system according to the third embodiment may include two or more information processing apparatuses 80. In this case, for example, the two or more information processing apparatuses 80 may be able to communicate with each other in a wired and/or wireless manner.

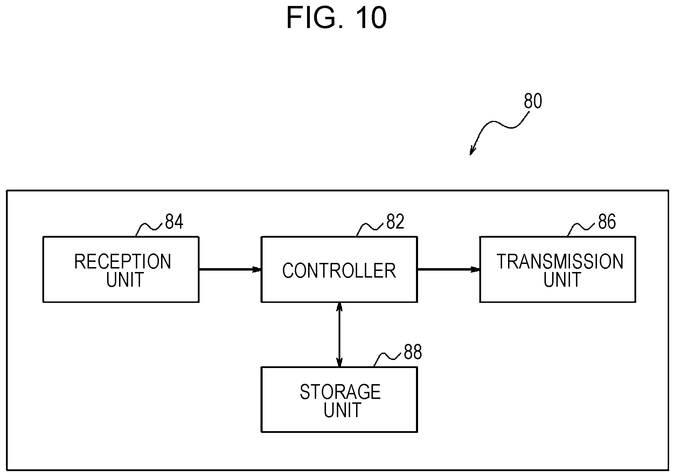

FIG. 10 is a functional block diagram schematically illustrating a configuration of the information processing apparatus according to the third embodiment. FIG. 10 illustrates an example of a configuration of the information processing apparatus 80 illustrated in FIG. 9 in more detail.

As illustrated in FIG. 10, the information processing apparatus 80 includes a controller 82, a reception unit 84, a transmission unit 86, and a storage unit 88.

The controller 82 includes at least one processor that controls and/or manages the functional blocks of the information processing apparatus 80 and the entire information processing apparatus 80. The controller 82 includes at least one processor such as a CPU that executes a program that defines a control procedure and implements functions thereof. Such a program is stored in, for example, the storage unit 88, an external storage medium connected to the information processing apparatus 80, or the like.

The reception unit 84 may be able to receive various kinds of information from another apparatus in a wired and/or wireless manner. For example, the reception unit 84 may receive information based on a detection result obtained by the sensor 5 of the electronic device 1 from the communication unit 70 of the electronic device 1 illustrated in FIG. 4. The reception unit 84 may also receive various kinds of information from another information processing apparatus or the like other than the information processing apparatus 80.

The transmission unit 86 may be able to transmit various kinds of information to another apparatus in a wired and/or wireless manner. For example, the transmission unit 86 may transmit information based on a result of processing performed by the controller 82, information read from the storage unit 88, and/or the like to the communication unit 70 of the electronic device 1 illustrated in FIG. 4. The transmission unit 86 may also transmit various kinds of information to another information processing apparatus or the like other than the information processing apparatus 80.

Each of the reception unit 84 and/or the transmission unit 86 is an interface for wired or wireless communication. The communication scheme carried out by the reception unit 84 and/or the transmission unit 86 according to the third embodiment may be based on a wireless communication standard. Examples of the wireless communication standard include cellular phone communication standards such as 2G, 3G, 4G, and 5G. Examples of the cellular phone communication standard include LTE (Long Term Evolution), W-CDMA (Wideband Code Division Multiple Access), CDMA2000, PDC (Personal Digital Cellular), GSM (registered trademark) (Global System for Mobile communications), and PHS (Personal Handy-phone System). Examples of the wireless communication standard include WiMAX (Worldwide Interoperability for Microwave Access), IEEE 802.11, Bluetooth (registered trademark), IrDA (Infrared Data Association), and NFC (Near Field Communication). The reception unit 84 and/or the transmission unit 86 can support one or more communication standards among the aforementioned communication standards.

The storage unit 88 may store a program executed by the controller 82, a result of processing performed by the controller 82, and so on. The storage unit 88 may function as a work memory of the controller 82. The storage unit 88 may be, for example, a semiconductor memory or a magnetic disk. However, the storage unit 88 is not limited to these, and can be any storage device. The storage unit 88 may be, for example, a storage medium such as a memory card inserted to the electronic device 1 according to the present embodiment. The storage unit 88 may be an internal memory of the CPU used as the controller 82 as described above.

An operation of the electronic device 1 according to the third embodiment and an operation of the information processing apparatus 80 according to the third embodiment are described.

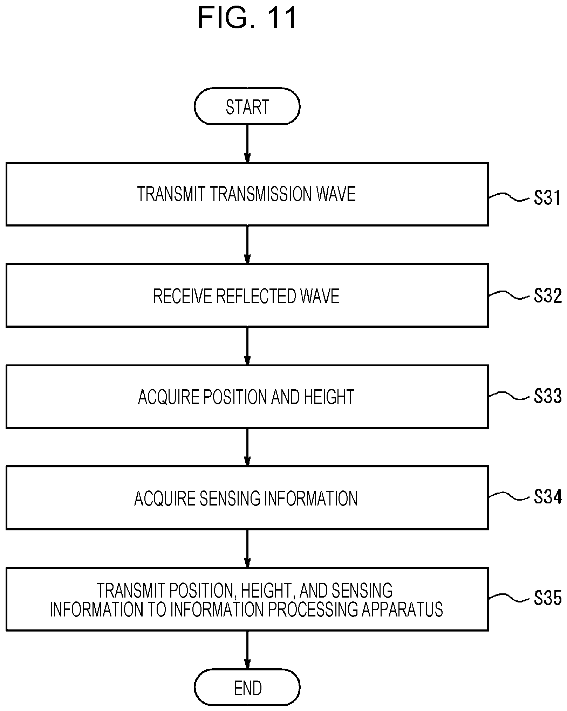

FIG. 11 is a flowchart for describing the operation of the electronic device 1 according to the third embodiment.

The electronic device 1 according to the third embodiment acquires the height and the position of the electronic device 1 and the sensing information at the position, and transmits the height, the position, and the sensing information to the information processing apparatus 80.

As in the second embodiment, the operation illustrated in FIG. 11 may start while the mobility device 100 such as a drone equipped with the electronic device 1 is flying.

In response to the start of the operation illustrated FIG. 11, the sensor controller 10 of the electronic device 1 according to the third embodiment transmits a transmission wave from the transmission antenna 25 (step S31), and receives a reflected wave of the transmission wave (step S32). The operation of steps S31 and S32 may be performed in the same and/or similar manner as in steps S24 to S25 illustrated in FIG. 7, respectively.

After receiving the reflected wave in step S32, the sensor controller 10 acquires the position and the height of the electronic device 1 (step S33). In step S33, the sensor controller 10 may acquire the position and the height of the electronic device 1 from the height acquiring unit (position acquiring unit) 60 illustrated in FIG. 4, for example.

After acquiring the position and the height of the electronic device 1 in step S33, the controller 50 acquires sensing information based on a transmission signal and a reception signal at the position of the electronic device 1 (step S34). The operation of step S34 may be performed in the same and/or similar manner as in step S22 illustrated in FIG. 7.

After acquiring the sensing information in step S34, the controller 50 transmits the information on the position and the height of the electronic device 1 and the sensing information at the position and the height, to the information processing apparatus 80 (step S35). The position and the height of the electronic device 1 may be those acquired in step S33. The sensing information at the position and the height of the electronic device 1 may be that acquired in step S34. In step S35, the controller 50 may transmit the information described above from the communication unit 70 of the electronic device 1 to the reception unit 84 of the information processing apparatus 80.

As described above, the electronic device 1 according to the third embodiment may transmit, to the information processing apparatus 80, the information on the position and the height of the electronic device 1 and the sensing information based on at least one of the transmission signal or the reception signal at the position of the electronic device 1.

When the multiple mobility devices 100 can communicate with the information processing apparatus 80 as illustrated in FIG. 9, each of the multiple mobility devices 100 may transmit the sensing information at the position and the height the mobility device 100 to the information processing apparatus 80. Thus, the information processing apparatus 80 can calculate the average noise power at the position and the height of each of the multiple mobility devices 100.

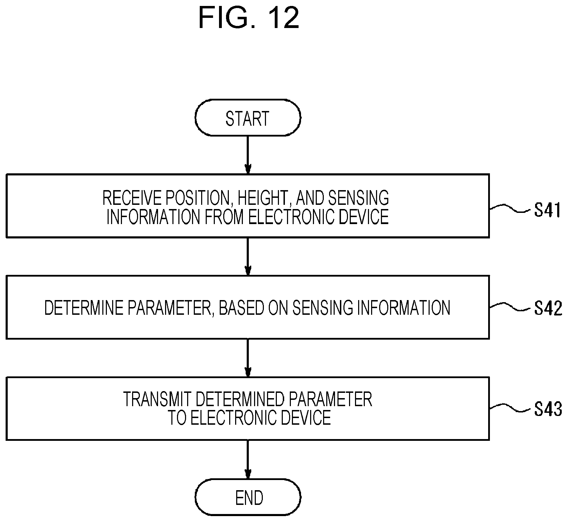

FIG. 12 is a flowchart for describing the operation of the information processing apparatus 80 according to the third embodiment.

The information processing apparatus 80 according to the third embodiment receives the height and the position of the electronic device 1 and the sensing information at the position. The information processing apparatus 80 according to the third embodiment transmits, to the electronic device 1, the parameter corresponding to the sensing information at the height and the position of the electronic device 1 (the parameter to be used in determination as to whether an object that reflects a transmission wave is detected).

The operation illustrated in FIG. 12 may start when the information processing apparatus 80 can communicate with at least one of the electronic devices 1. The operation illustrated in FIG. 12 may start as an operation performed in the information processing apparatus 80 subsequently to the transmission of the various kinds of information to the information processing apparatus 80 by the electronic device 1, that is, step S35 illustrated in FIG. 11.

In response to the start of the operation illustrated in FIG. 12, the controller 82 of the information processing apparatus 80 receives, from the electronic device 1 according to the third embodiment, the position and the height of the electronic device 1 and the sensing information at the position and the height from the electronic device 1 (step S41). In step S41, the controller 82 may receive, with the reception unit 84, the information described above transmitted from the communication unit 70 of the electronic device 1.

After receiving the position and the height of the electronic device 1 and the sensing information at the position and the height in step S41, the controller 82 may store these pieces of information in the storage unit 88. Thus, the storage unit 88 of the information processing apparatus 80 can store the average noise power for each height section as illustrated in FIG. 8, for each position or each position section of each electronic device 1. In step S41, each time the controller 82 receives the sensing information, the controller 82 may update the average noise power using the same or similar method as in step S22 of FIG. 7.

After receiving the sensing information (and updating the average noise power) in step S41, the controller 82 may determine a parameter to be used in the electronic device 1 in object detection, based on the sensing information (or the updated average noise power) (step S42). Thus, in the information processing apparatus 80 according to the third embodiment, the storage unit 88 may store, for each position or each position section of the electronic device 1, a suitable detection threshold (see FIG. 8) corresponding to each average noise power that is updated as appropriate.

As described above, the information processing apparatus 80 can determine a parameter (detection threshold) that corresponds to the average noise power at the position and the height of each of the multiple electronic devices 1 and that is to be used in object detection, by receiving the sensing information from the electronic device 1. Also in the present embodiment, if the threshold is defined as an absolute value and, for example, V2 denotes reflected power as illustrated in FIG. 6, a large threshold may be set. On the other hand, if the threshold is defined as a relative value, for example, like a difference between P1 and V2 illustrated in FIG. 6 and, for example, V2 denotes the reflected power as illustrated in FIG. 6, a small threshold may be set.

After determining the parameter in step S42, the controller 82 transmits the parameter to the electronic device 1 (step S43). In step S43, the controller 82 may transmit the parameter to be used in object detection from the transmission unit 86 to the communication unit 70 of the electronic device 1.

In step S43, the information processing apparatus 80 may transmit (return) the parameter (detection threshold) corresponding to the position and the height, to the electronic device 1 that has transmitted the sensing information along with the position and the height. In step S43, the information processing apparatus 80 may transmit the parameter (detection threshold) corresponding to the position and the height, in response to a request from the electronic device 1 located near the electronic device 1 that has transmitted the sensing information along with the position and the height.

As described above, the information processing apparatus 80 according to the third embodiment can communicate with the electronic device 1. The electronic device 1 according to the third embodiment may detect an object that reflects a transmission wave, based on a transmission signal transmitted as the transmission wave and a reception signal received as a reflected wave that is the transmission wave having been reflected. In the information processing apparatus 80 according to the third embodiment, the reception unit 84 receives, from the electronic device 1, information on a position and a height of the electronic device 1 and sensing information based on at least one of the transmission signal or the reception signal at the position of the electronic device 1. In the information processing apparatus 80 according to the third embodiment, the controller 82 determines, based on the sensing information at the position and the height of the electronic device 1, a parameter to be used in the electronic device 1 in determination as to whether an object that reflects the transmission wave is detected. In the information processing apparatus 80 according to the third embodiment, the transmission unit 86 transmits, to the electronic device 1, the parameter determined by the controller 82 (the parameter to be used in the electronic device 1 in determination as to whether an object that reflects the transmission wave is detected).

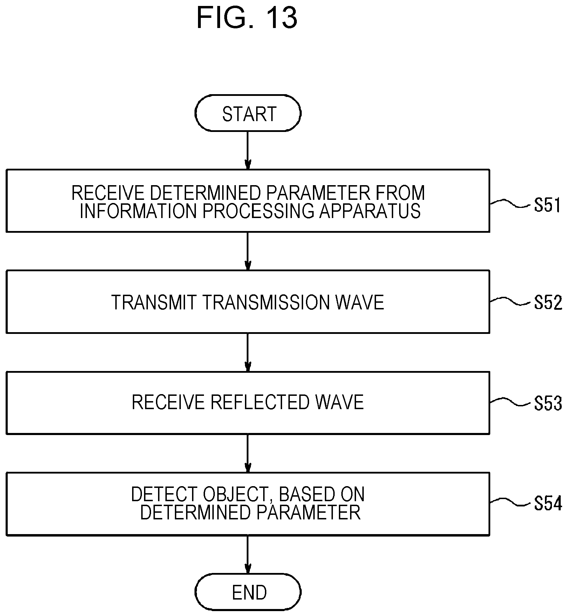

FIG. 13 is a flowchart for describing the operation of the electronic device 1 according to the third embodiment.

The electronic device 1 according to the third embodiment may detect an object by using the parameter transmitted from the information processing apparatus 80.

The operation illustrated in FIG. 13 may start as an operation performed in the electronic device 1 subsequently to the transmission of the parameter to the electronic device 1 by the information processing apparatus 80, that is, step S43 illustrated in FIG. 12.

In response to the start of the operation illustrated in FIG. 13, the controller 50 of the electronic device 1 receives the determined parameter from the information processing apparatus 80 according to the third embodiment (step S51). In step S51, the controller 50 may receive, with the communication unit 70, the parameter transmitted from the transmission unit 86 of the information processing apparatus 80. The parameter received in step SS51 may be stored in the storage unit 40, for example.

After the receipt of the parameter in step S51, the sensor controller 10 of the electronic device 1 according to the third embodiment transmits a transmission wave from the transmission antenna 25 (step S52), and receives a reflected wave of the transmission wave (step S53). The operation of steps S52 and S53 may be performed in the same and/or similar manner as in steps S31 to S32 illustrated in FIG. 11, respectively.

After receiving the reflected wave in step S53, the sensor controller 10 detects an object that reflects the transmission wave, based on a transmission signal and a reception signal (step S54). In step S54, the sensor controller 10 determines whether an object that reflects the transmission wave is detected, based on the parameter received in step S51. Specifically, if the power of the reflected wave exceeds the parameter (threshold) received in step S51, the sensor controller 10 determines that an object is detected at that distance. On the other hand, if the power of the reflected wave does not exceed the parameter (threshold) received in step S51, the sensor controller 10 determines that no object is detected at that distance.

As described above, the electronic device 1 according to the third embodiment may receive a parameter to be used in determination as to whether an object that reflects a transmission wave is detected, from the information processing apparatus 80.

By collecting the pieces of information acquired by the respective electronic devices 1 in the information processing apparatus 80, the system according to the third embodiment allows each of the electronic devices 1 to detect an object by using the parameter corresponding to the average noise power at the position and the height of the electronic device 1.

In the third embodiment, the information processing apparatus 80 determines the parameter for each of the electronic devices 1 and transmits the parameter to a respective one of the electronic devices 1. However, for example, the information processing apparatus 80 may transmit the average noise power based on the sensing information transmitted from each of the electronic devices 1, to the electronic device 1. In this case, each of the electronic devices 1 that has received the average noise power may determine a parameter corresponding to the respective average noise power in each of the electronic devices 1.

### (Other Embodiments)

As described above, in general, as the electronic device 1 is closer to the ground surface, an influence of various buildings or the like increases and the noise floor tends to be relatively high. Conversely, as the electronic device 1 is farther from the ground surface, an influence of various buildings or the like decreases and the noise floor tends to be relatively low. Thus, for example, if the noise floor based on the acquired sensing information does not become low and rather becomes high even when the height of the electronic device 1 increases, the controller 50 of the electronic device 1 may issue a predetermined warning or may re-acquire the sensing information, for example.

In general, the noise floor may change relatively greatly in response to a change in the height of the electronic device 1. On the other hand, when the change in the height of the electronic device 1 is small, a rapid change in the noise floor in response to the change in the position of the electronic device 1 is unlikely. Thus, for example, when the noise floor based on the acquired sensing information rapidly changes although the height of the electronic device 1 does not change much, the controller 50 of the electronic device 1 may issue a predetermined warning or may re-acquire the sensing information, for example.

While the present disclosure has been described based on the various drawings and the embodiments, it is to be noted that a person skilled in the art can easily make various variations or corrections based on the present disclosure. Therefore, it is to be noted that these variations or corrections are within the scope of the present disclosure. For example, functions and the like included in each functional unit can be rearranged without causing any logical contradiction. Multiple functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure based on the present disclosure. Therefore, these variations and corrections are within the scope of the present disclosure. For example, in each of the embodiments, each functional unit, each means, each step, or the like can be added to another embodiment or replaced with each functional unit, each means, each step, or the like in another embodiment without causing any logical contradiction. In each of the embodiments, multiple functional units, means, steps, or the like may be combined into one or may be divided. The embodiments according to the present disclosure described above are not limited to strict implementation according to the respective embodiments described above, and may be implemented by appropriately combining the features or omitting part thereof.

The embodiments described above are not limited only to implementation as the electronic device 1. For example, the embodiments described above may be implemented as a method for controlling a device such as the electronic device 1. For example, the embodiments described above may be implemented as a program to be executed by a device such as the electronic device 1.

The electronic device 1 according to one embodiment may include, as the minimum configuration, at least part of only one of the sensor 5 or the sensor controller 10, for example. On the other hand, the electronic device 1 according to one embodiment may appropriately include at least any of the signal generating unit 21, the synthesizer 22, the phase control units 23, the amplifiers 24, or the transmission antennas 25 illustrated in FIG. 2 in addition to the sensor controller 10. The electronic device 1 according to the one embodiment may appropriately include at least any of the reception antenna 31, the LNA 32, the mixer 33, the IF unit 34, or the AD conversion unit 35 instead of or along with the functional units described above. The electronic device 1 according to the one embodiment may include the storage unit 40. As described above, the electronic device 1 according to the one embodiment can employ various configurations. When the electronic device 1 according to the one embodiment is mounted in the mobility device 100, for example, at least any of the functional units described above may be installed at an appropriate place such as the inside of the mobility device 100. On the other hand, in one embodiment, for example, at least any of the transmission antennas 25 or the reception antennas 31 may be installed outside the mobility device 100.

### REFERENCE SIGNS

- 1: electronic device
- 5: sensor
- 10: sensor controller
- 11: distance FFT processing unit
- 12: velocity FFT processing unit
- 13: angle-of-arrival estimating unit
- 14: object detecting unit
- 15: detection range determining unit
- 16: parameter setting unit
- 20: transmission unit
- 21: signal generating unit
- 22: synthesizer
- 23: phase control unit
- 24: amplifier
- 25: transmission antenna
- 30: reception unit
- 31: reception antenna
- 32: LNA
- 33: mixer
- 34: IF unit
- 35: AD conversion unit
- 40: storage unit
- 50: controller
- 60: height acquiring unit
- 70: communication unit
- 80: information processing apparatus
- 82: controller
- 84: reception unit
- 86: transmission unit
- 88: storage unit
- 100: mobility device
- 200: object

## Claims

1. An electronic device comprising:
a transmission antenna configured to transmit a transmission wave;
a reception antenna configured to receive a reflected wave that is the transmission wave having been reflected; and
a controller configured to detect an object that reflects the transmission wave, based on a transmission signal transmitted as the transmission wave and a reception signal received as the reflected wave, wherein
a parameter to be used in determination as to whether the object is detected is determined based on a height of the electronic device.

2. The electronic device according to claim 1, wherein the parameter to be used in determination as to whether the object is detected is determined based on a height of the electronic device from a ground surface.

3. The electronic device according to claim 1, wherein the parameter to be used in determination as to whether the object is detected is determined based on a position of the electronic device in a vertical direction.

4. The electronic device according to any of claims 1 to 3, wherein
sensing information based on at least one of the transmission signal or the reception signal at the height of the electronic device is acquired, and
a parameter corresponding to the sensing information is determined as the parameter to be used in determination as to whether the object is detected.

5. The electronic device according to claim 4, wherein a parameter corresponding to an average of the sensing information in a predetermined height section of the electronic device is determined as the parameter to be used in determination as to whether the object is detected.

6. The electronic device according to claim 5, wherein the average of the sensing information in the predetermined height section of the electronic device is updated by acquisition of the sensing information.

7. An electronic device comprising:
a transmission antenna configured to transmit a transmission wave;
a reception antenna configured to receive a reflected wave that is the transmission wave having been reflected; and
a controller configured to detect an object that reflects the transmission wave, based on a transmission signal transmitted as the transmission wave and a reception signal received as the reflected wave, wherein
information on a position and a height of the electronic device and sensing information based on at least one of the transmission signal or the reception signal at the position of the electronic device are transmitted to an information processing apparatus.

8. The electronic device according to claim 7, wherein a parameter to be used in determination as to whether the object is detected is received from the information processing apparatus.

9. The electronic device according to any of claims 4 to 8, wherein the sensing information includes information related to a noise level during object detection at the height of the electronic device.

10. An information processing apparatus that communicates with an electronic device, the electronic device being configured to detect an object that reflects a transmission wave, based on a transmission signal transmitted as the transmission wave and a reception signal received as a reflected wave that is the transmission wave having been reflected, the information processing apparatus comprising:
a reception unit configured to receive, from the electronic device, information on a position and a height of the electronic device and sensing information based on at least one of the transmission signal or the reception signal at the position of the electronic device;
a controller configured to determine a parameter to be used in the electronic device in determination as to whether the object is detected, based on the sensing information at the position and the height of the electronic device; and
a transmission unit configured to transmit the parameter determined by the controller to the electronic device.

11. The information processing apparatus according to claim 10, wherein the sensing information includes information related to a noise level during object detection at the position of the electronic device.

12. A parameter determining method for determining a parameter to be used in an electronic device in determination as to whether an object that reflects a transmission wave is detected, the electronic device including
a transmission antenna configured to transmit the transmission wave,
a reception antenna configured to receive a reflected wave that is the transmission wave having been reflected, and
a controller configured to detect the object, based on a transmission signal transmitted as the transmission wave and a reception signal received as the reflected wave,
the parameter determining method comprising:
determining a parameter to be used in determination as to whether the object is detected, based on a height of the electronic device.

13. A parameter determining program for determining a parameter to be used in an electronic device in determination as to whether an object that reflects a transmission wave is detected, the electronic device including
a transmission antenna configured to transmit the transmission wave,
a reception antenna configured to receive a reflected wave that is the transmission wave having been reflected, and
a controller configured to detect the object, based on a transmission signal transmitted as the transmission wave and a reception signal received as the reflected wave,
the parameter determining program causing
the electronic device to perform:
determining a parameter to be used in determination as to whether the object is detected, based on a height of the electronic device.
